(19) Europäisches Patentamt
European Patent Office
Office européen des brevets

(11) **EP 4 249 198 A1**

(12) **EUROPEAN PATENT APPLICATION**
published in accordance with Art. 153(4) EPC

(43) Date of publication:
**27.09.2023 Bulletin 2023/39**

(21) Application number: **21894568.1**

(22) Date of filing: **12.11.2021**

(51) International Patent Classification (IPC):
**B29B 11/16** (2006.01)   **C08J 5/24** (2006.01)
**C08G 18/32** (2006.01)   **B29C 70/52** (2006.01)

(52) Cooperative Patent Classification (CPC):
**B29B 11/16; B29C 70/52; C08G 18/32; C08J 5/24**

(86) International application number:
**PCT/JP2021/041703**

(87) International publication number:
**WO 2022/107694 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.11.2020 JP 2020192094**

(71) Applicant: **DKS Co. Ltd.**
**Kyoto-shi, Kyoto 600-8873 (JP)**

(72) Inventors:
• **HIRAYAMA, Norio**
  **Tokyo 102-8275 (JP)**
• **TAKEKAWA, Tadashi**
  **kyoto-shi, Kyoto 600-8873 (JP)**
• **YAMADA, Yoshinori**
  **kyoto-shi, Kyoto 600-8873 (JP)**
• **SHIOJI, Yudai**
  **kyoto-shi, Kyoto 600-8873 (JP)**

(74) Representative: **TBK**
**Bavariaring 4-6**
**80336 München (DE)**

(54) **MANUFACTURING METHOD AND MANUFACTURING DEVICE FOR THERMOPLASTIC RESIN COMPLEX**

(57)   Provided is a manufacturing method for efficiently manufacturing a thermoplastic resin composite containing a thermoplastic resin and a fiber by pultrusion.

In the manufacturing method according to an embodiment, fibers 10 are continuously impregnated with a thermoplastic resin-forming composition containing an active hydrogen component and a diisocyanate component, after impregnation, the fibers 10 are caused to pass through a heat-molding unit 30 to perform polymerization of a thermoplastic resin and molding of a thermoplastic resin composite 12, and the thermoplastic resin composite 12 is continuously pulled out from the heat-molding unit 30. In the method, a heating temperature of the heat-molding unit 30 is set to be lower than a glass transition temperature of the thermoplastic resin, so that the thermoplastic resin of the thermoplastic resin composite 12 pulled out from the heat-molding unit 30 is in a glassy state.

FIG. 1

**Description**

Technical Field

The present invention relates to a method and an apparatus for manufacturing a thermoplastic resin composite containing a thermoplastic resin and a fiber.

Background Art

Fiber-reinforced plastics, which are composites containing a resin and a fiber, are used in a wide range of fields, such as the automobile industry, as alternatives to metal materials for the purpose of reducing the weight because of their good specific strength and specific rigidity.

As a method for manufacturing a fiber-reinforced plastic, for example, PTL 1 discloses a pultrusion process as a method for continuously manufacturing a thermosetting resin composite containing a thermosetting resin as a matrix. PTL 2 discloses that a fiber-reinforced polyisocyanurate matrix composite material is subjected to pultrusion by impregnating a fiber with a polyisocyanurate reaction mixture prepared by mixing a polyol component and a polyisocyanate component, and causing the resulting fiber to pass through a heated die to cure the polyisocyanurate reaction mixture.

Thermosetting resins are in a liquid state at room temperature and can be impregnated into fibers at a stage of an unpolymerized monomer whose viscosity is not high; therefore, thermosetting resins are easily impregnated into fibers even at a high fiber content and can be continuously molded by simple equipment. However, thermosetting resins have a drawback that they cannot be reprocessed or reused because thermosetting resins have a three-dimensional crosslinked structure after polymerization reaction (curing) and cannot be remelted after being impregnated into fibers and cured.

On the other hand, thermoplastic resin composites, which are fiber-reinforced plastics containing a thermoplastic resin as a matrix, can be reprocessed and reused because the thermoplastic resin serving as a base material is remelted and softened by heating. However, in general, thermoplastic resins are supplied in the state of a polymer, such as a pellet or a film, in terms of raw material form in molding. Accordingly, thermoplastic resins have a much higher viscosity than thermosetting resins when they are melted to be impregnated into fibers. Therefore, it is difficult to continuously produce a thermoplastic resin composite that has a high fiber content and that is in a good impregnation state.

In view of the above, a known method for manufacturing a thermoplastic resin composite includes causing a fiber impregnated with a monomer to pass through a heated die, and simultaneously performing polymerization of the monomer and molding of the resulting resin to obtain a thermoplastic resin composite. However, there is a problem in that the thermoplastic resin composite immediately after being pulled out from the die tends to lose its shape because a thermoplastic resin serving as a matrix of the composite is in a soft rubber-like state. Therefore, for example, a cooling step for the purpose of curing the resin is necessary.

As a method for continuously manufacturing a thermoplastic resin composite, PTL 3 discloses that a fiber is impregnated with a polymerizable lactam liquid mixture, the impregnated fiber is caused to pass through a heated die, polymerization of a lactam monomer and molding of a thermoplastic polyamide resin obtained by the polymerization are simultaneously performed, and the resulting composite is continuously pulled out from the die with a pulling-out device.

Note that PTL 4 discloses, as a composition used for forming a matrix resin of a thermoplastic resin composite, a two-component curable composition that has an active hydrogen component containing an aromatic diamine having an alkylthio group and a diisocyanate component containing at least one diisocyanate selected from the group consisting of aliphatic diisocyanates, alicyclic diisocyanates, and modified products thereof.

Citation List

Patent Literature

PTL 1: Japanese Unexamined Patent Application Publication No. 2004-074427
PTL 2: Japanese Unexamined Patent Application Publication (Translation of PCT application) No. 2002-530445
PTL 3: Japanese Unexamined Patent Application Publication No. 2017-007266
PTL 4: Japanese Patent No. 6580774

Summary of Invention

Technical Problem

As described above, it is known that a thermoplastic resin composite is manufactured by impregnating a fiber with a monomer of a thermoplastic resin, simultaneously performing polymerization and molding of the resulting resin, and continuously pulling out the resulting composite. However, it is not known that the polymerization is performed at a temperature lower than the glass transition temperature of the thermoplastic resin and pultrusion is performed in a glassy state, and it is difficult to efficiently manufacture a thermoplastic resin composite.

In light of the above, an object of embodiments of the present invention is to provide a manufacturing method capable of efficiently manufacturing a thermoplastic resin composite by pultrusion.

Solution to Problem

A first embodiment of the present invention is a method for manufacturing a thermoplastic resin composite containing a thermoplastic resin and a fiber, the method including continuously impregnating a fiber with a thermoplastic resin-forming composition containing an active hydrogen component and a diisocyanate component; causing the fiber to pass through a heat-molding unit to perform polymerization of the thermoplastic resin-forming composition and molding of a thermoplastic resin composite containing a thermoplastic resin obtained by the polymerization; and continuously pulling out the thermoplastic resin composite from the heat-molding unit, in which a heating temperature of the heat-molding unit is lower than a glass transition temperature of the thermoplastic resin, and the thermoplastic resin of the thermoplastic resin composite pulled out from the heat-molding unit is in a glassy state.

A second embodiment of the present invention is an apparatus for manufacturing a thermoplastic resin composite containing a thermoplastic resin and a fiber, the apparatus including an impregnation unit that continuously impregnates a fiber with a thermoplastic resin-forming composition containing an active hydrogen component and a diisocyanate component; a heat-molding unit that causes the fiber to pass therethrough to perform polymerization of the thermoplastic resin-forming composition and molding of a thermoplastic resin composite containing a thermoplastic resin obtained by the polymerization; and a pulling-out device that continuously pulls out the thermoplastic resin composite from the heat-molding unit, in which a heating temperature of the heat-molding unit is lower than a glass transition temperature of the thermoplastic resin, and the pulling-out device pulls out from the heat-molding unit the thermoplastic resin composite in which the thermoplastic resin is in a glassy state.

In the embodiments, when a composite obtained by impregnating the fiber with the thermoplastic resin-forming composition is heated at the heating temperature, a flexural modulus of elasticity may become, within five minutes, 10% or more of a flexural modulus of elasticity at a time of complete cure.

In the embodiments, the heating temperature may be lower than the glass transition temperature of the thermoplastic resin by 30°C or more.

In the embodiments, the thermoplastic resin-forming composition may have a pot life of 30 seconds or more, the pot life being a time taken to reach a viscosity of 10,000 mPa.s under a temperature condition of 25°C.

In the embodiments, the active hydrogen component of the thermoplastic resin-forming composition may contain an aromatic diamine having an alkylthio group, and the diisocyanate component may contain at least one diisocyanate selected from the group consisting of aliphatic diisocyanates, alicyclic diisocyanates, and modified products thereof.

Advantageous Effects of Invention

According to the embodiments of the present invention, a thermoplastic resin-forming composition impregnated into a fiber is polymerized in a heat-molding unit whose temperature is lower than the glass transition temperature, and the resulting thermoplastic resin composite in which a thermoplastic resin is in the glassy state is pulled out from the heat-molding unit. Therefore, the shape of the thermoplastic resin composite molded in the heat-molding unit can be maintained even without performing a cooling step or the like, and the method can proceed to the next step such as cutting to improve the manufacturing efficiency.

Brief Description of Drawings

[Fig. 1] Fig. 1 is a schematic diagram of an apparatus for manufacturing a thermoplastic resin composite according to an embodiment.
[Fig. 2] Fig. 2 is a schematic diagram of an apparatus for manufacturing a thermoplastic resin composite according to another embodiment.

[Fig. 3] Fig. 3 is a photograph of a cross section of a formed product after hot-press molding in Example. Description of Embodiments

Embodiments of the present invention will be described in detail below.

A manufacturing method according to an embodiment is a method for manufacturing a thermoplastic resin composite containing a thermoplastic resin and a fiber. The manufacturing method includes the following steps:

an impregnation step of continuously impregnating a fiber with a thermoplastic resin-forming composition;

a heat-molding step of causing the impregnated fiber to pass through a heat-molding unit to perform polymerization of the thermoplastic resin-forming composition and molding of a thermoplastic resin composite containing a thermoplastic resin obtained by the polymerization; and

a pulling-out step of continuously pulling out the thermoplastic resin composite from the heat-molding unit.

In the manufacturing method, a heating temperature (hereinafter referred to as a heating temperature T) in the heat-molding step is lower than a glass transition temperature (Tg) of the thermoplastic resin, and the thermoplastic resin of the thermoplastic resin composite pulled out from the heat-molding unit is in a glassy state.

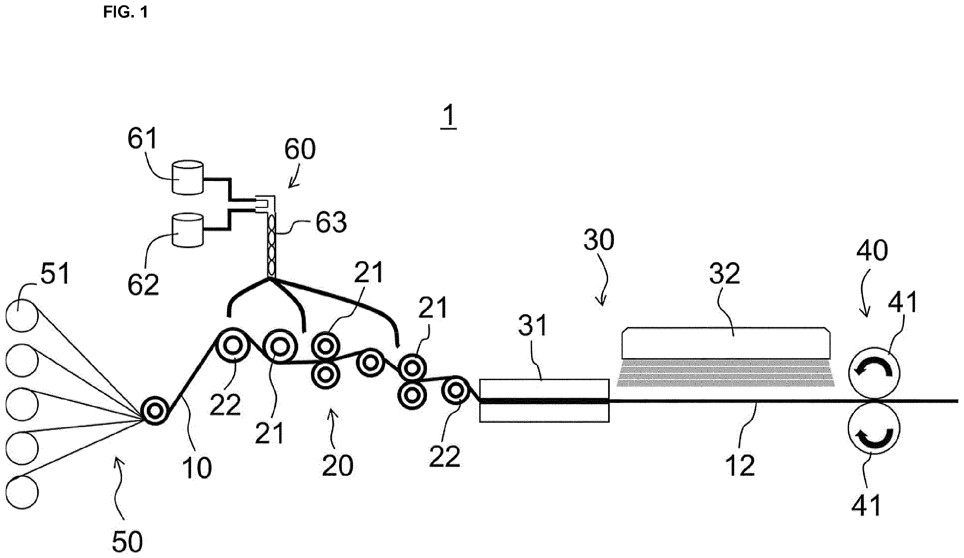

Fig. 1 illustrates an example of a manufacturing apparatus 1 applicable to the manufacturing method. The manufacturing apparatus 1 includes an impregnation unit 20 that continuously impregnates fibers 10 with a thermoplastic resin-forming composition, a heat-molding unit 30 that heats the fibers 10 impregnated with the thermoplastic resin-forming composition and molds a thermoplastic resin composite 12, and a pulling-out device 40 that continuously pulls out the molded thermoplastic resin composite 12. More specifically, the manufacturing apparatus 1 further includes a fiber supply unit 50 that supplies the fibers 10 to the impregnation unit 20 and a monomer supply unit 60 that supplies the thermoplastic resin-forming composition to the impregnation unit 20.

The thermoplastic resin composite is a fiber-reinforced thermoplastic resin that contains a fiber serving as a reinforcing material and a thermoplastic resin serving as a base material (matrix).

Examples of the fiber include fibers of glass, carbon, metals, ceramics, and polymers. These may be used alone or in combination of two or more thereof. The fiber may be provided with a glue or coating material that promotes binding of a component contained in the thermoplastic resin-forming composition to the fiber. The fiber can be used in the form of, for example, a filament, a fiber, a continuous fiber such as a roving of a strand or a woven fabric, a knitted mat, a nonwoven mat, or another form.

The thermoplastic resin-forming composition (hereinafter, also referred to as a monomer liquid mixture) is a composition used for forming a thermoplastic resin and is a liquid mixture containing an active hydrogen component and a diisocyanate component. The active hydrogen component used is bifunctional, and more specifically, a diamine and/or a diol is used. When the active hydrogen component contains a diol, the thermoplastic resin is a thermoplastic polyurethane resin, when the active hydrogen component contains a diamine, the thermoplastic resin is a thermoplastic polyurea resin, and when the active hydrogen component contains a diol and a diamine, the thermoplastic resin is a thermoplastic polyurethane-urea resin including both urethane and urea bonds in the main chain. The thermoplastic resin may be any of these. The thermoplastic resin is preferably a thermoplastic polyurea resin or a thermoplastic polyurethane-urea resin.

The monomer liquid mixture used preferably has a pot life of 30 seconds or more, the pot life being a time taken to reach a viscosity of 10,000 mPa.s after mixing under a temperature condition of 25°C. The use of a monomer liquid mixture having such a long pot life can prevent the resin from being cured before reaching the heat-molding unit 30. The pot life may be 100 seconds or more, and 200 seconds or more. The upper limit of the pot life is not particularly limited and may be, for example, 1,000 seconds or less.

The monomer liquid mixture used preferably has a high glass transition temperature (Tg) of the thermoplastic resin after polymerization. This is because since the polymerization in this embodiment is conducted at a lower temperature than the glass transition temperature, having a high glass transition temperature is advantageous to increase the polymerization temperature for the purpose of shortening the polymerization time. The glass transition temperature of the thermoplastic resin is, for example, preferably 100°C or higher, more preferably 120°C or higher, and still more preferably 150°C or higher. The upper limit of the glass transition temperature is not particularly limited and may be, for example, 220°C or lower and 200°C or lower.

As for the monomer liquid mixture, when a fiber is impregnated with the composition and heated at the heating temperature T, a flexural modulus of elasticity of a composite of the composition and the fiber preferably becomes, within five minutes, 10% or more of a flexural modulus of elasticity of the thermoplastic resin composite at the time of complete cure. When sufficient mechanical properties can be exhibited within five minutes in this manner, productivity in continuous pultrusion can be improved. Herein, the flexural modulus of elasticity is the modulus of longitudinal elasticity (the slope of a stress-strain curve when the material is elastically deformed) measured in a flexural test and is measured in accordance with JIS K7074.

The monomer liquid mixture having the properties described above is not particularly limited. As one embodiment, the two-component curable composition described in PTL 4 may be used, and a composition that includes an active hydrogen component containing an aromatic diamine (a) having an alkylthio group and an diisocyanate component containing at least one diisocyanate (b) selected from the group consisting of aliphatic diisocyanates, alicyclic diisocyanates, and modified products thereof is preferred.

The aromatic diamine (a) having an alkylthio group is preferably a compound having two amino groups that are directly bound to an aromatic ring and an alkylthio group that is directly bound to the aromatic ring. The alkylthio group is a group represented by $-SC_nH_{2n+1}$ (where n is an integer of 1 or more, preferably an integer of 1 to 5). The aromatic diamine (a) may have one alkylthio group or two or more alkylthio groups in one molecule. The aromatic diamine (a) preferably has two alkylthio groups that are directly bound to an aromatic ring.

As the aromatic diamine (a), for example, a dialkylthiotoluenediamine such as dimethylthiotoluenediamine, diethylthiotoluenediamine, or dipropylthiotoluenediamine is preferably used.

As the active hydrogen component, diamines such as other aromatic diamines may be used in combination with the aromatic diamine (a). Examples of such other diamines include 4,4'-methylenedianiline, 4,4'-methylenebis(2-methylaniline), 4,4'-methylenebis(2-ethylaniline), 4,4'-methylenebis(2-isopropylaniline), 4,4'-methylenebis(2,6-dimethylaniline), 4,4'-methylenebis(2,6-diethylaniline), 4,4'-methylenebis(N-methylaniline), 4,4'-methylenebis(N-ethylaniline), 4,4'-methylenebis(N-sec-butylaniline), and diethyltoluenediamine. These may be used alone or in combination of two or more thereof.

The diamine used as the active hydrogen component preferably contains the aromatic diamine (a) as a main component. The aromatic diamine (a) preferably accounts for 50% by mass or more of the diamine, and the aromatic diamine (a) more preferably accounts for 70% by mass or more of the diamine. The aromatic diamine (a) preferably accounts for 15% by mass or more of the active hydrogen component, the aromatic diamine (a) more preferably accounts for 40% by mass or more of the active hydrogen component, and the aromatic diamine (a) still more preferably accounts for 700 by mass or more of the active hydrogen component.

The active hydrogen component may contain a diol (c) along with the diamine. Examples of the diol (c) include alkylene glycols such as ethylene glycol and propylene glycol; polyalkylene glycols such as diethylene glycol, triethylene glycol, dipropylene glycol, and tripropylene glycol; cyclohexanedimethanol; and bisphenol A. These may be used alone or in combination of two or more thereof.

When the active hydrogen component contains the diol (c), a mass ratio (a/c) of the aromatic diamine (a) to the diol (c) is preferably 0.1 to 30. The mass ratio (a/c) is more preferably 0.5 to 20, still more preferably 1.0 to 10.

The active hydrogen component is bifunctional so as to form a thermoplastic resin. However, the active hydrogen component may contain a trifunctional or higher-functional polyamine and a trifunctional or higher-functional polyol within the range where a thermoplastic resin is obtained.

With regard to the diisocyanate (b), examples of the aliphatic diisocyanate (i.e., chain aliphatic diisocyanate) include tetramethylene diisocyanate, dodecamethylene diisocyanate, hexamethylene diisocyanate (HDI), 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate. Examples of modified products of the aliphatic diisocyanate include isocyanate group-terminated urethane prepolymer products, bifunctional adduct-modified products, and bifunctional allophanate-modified products obtained by reacting an aliphatic diisocyanate with a diol. Of these, at least one selected from the group consisting of hexamethylene diisocyanate (HDI) and modified products thereof is preferably used as the aliphatic diisocyanate.

Examples of the alicyclic diisocyanate include isophorone diisocyanate (IPDI), hydrogenated xylylene diisocyanate, 4,4'-dicyclohexylmethane diisocyanate (H12MDI), 1,4-cyclohexane diisocyanate, methylcyclohexylene diisocyanate, and 1,3-bis(isocyanatomethyl)cyclohexane. Examples of modified products of the alicyclic diisocyanate include isocyanate group-terminated urethane prepolymer products, bifunctional adduct-modified products, and bifunctional allophanate-modified products obtained by reacting an alicyclic diisocyanate with a diol. Of these, at least one selected from the group consisting of isophorone diisocyanate (IPDI) and 4,4'-dicyclohexylmethane diisocyanate (H12MDI) is preferably used as the alicyclic diisocyanate.

The isocyanate group content of the diisocyanate (b) is preferably 15% to 50% by mass. The term "isocyanate group content" as used herein refers to a mass proportion of reactive isocyanate groups (NCO) of a bifunctional diisocyanate (b) in the diisocyanate (b). The isocyanate group content can be measured in accordance with JIS K7301-6-3.

The diisocyanate (b) preferably accounts for 80% by mass or more, more preferably accounts for 90% by mass or more, still more preferably accounts for 95% by mass or more, and particularly preferably 98% by mass or more of the diisocyanate component. A bifunctional isocyanate, that is, a diisocyanate is used as an isocyanate to be reacted with the active hydrogen component so as to form a thermoplastic resin. However, a trifunctional or higher-functional polyisocyanate may be contained within the range where a thermoplastic resin is obtained.

The monomer liquid mixture is obtained by mixing a liquid A containing the active hydrogen component and a liquid B containing the diisocyanate component. By mixing the liquid A and the liquid B together, both components can be reacted and cured (that is, polymerized) to obtain an amorphous thermoplastic resin by reaction curing.

The monomer liquid mixture may contain a catalyst to promote a reaction between the active hydrogen component and the diisocyanate component. As the catalyst, a metal catalyst or an amine-based catalyst usually used for manufacturing a polyurethane resin can be used. Examples of the metal catalyst include tin catalysts such as dibutyltin dilaurate, dioctyltin dilaurate, and dibutyltin dioctoate; lead catalysts such as lead octylate, lead octenoate, and lead naphthenate; and bismuth catalysts such as bismuth octylate and bismuth neodecanoate. Examples of the amine-based catalyst include tertiary amine compounds such as triethylenediamine. These catalysts may be used alone or in combination.

Other than the foregoing, the monomer liquid mixture may optionally contain various additives such as a plasticizer, a flame retardant, an antioxidant, a moisture absorbent, a fungicide, a silane coupling agent, an antifoaming agent, a surface conditioner, and an internal release agent.

In the monomer liquid mixture, the molar ratio of isocyanate groups to active hydrogen groups (NCO/active hydrogen groups) is not particularly limited and may be 1.0 or more, 1.2 or more, or 1.5 or more. The molar ratio (NCO/active hydrogen groups) may be 2.0 or less, 1.5 or less, or 1.2 or less.

The proportion of the fiber to the thermoplastic resin in the thermoplastic resin composite is not particularly limited. For example, the volume fraction of the fiber per unit volume of the thermoplastic resin composite may be 300 to 70%, or 50% to 60%.

Next, a method for manufacturing a thermoplastic resin composite according to an embodiment will be described with reference to Fig. 1.

In the impregnation step, in the impregnation unit 20, the fibers 10 supplied from the fiber supply unit 50 are impregnated with a monomer liquid mixture supplied from the monomer supply unit 60.

In this example, the fiber supply unit 50 gathers fibers drawn out from a plurality of bobbins 51 together and supplies the fibers 10 to the impregnation unit 20.

In this example, the monomer supply unit 60 includes a first tank 61 that stores a liquid A containing an active hydrogen component, a second tank 62 that stores a liquid B containing a diisocyanate component, and a mixer 63 that mixes the liquid A fed from the first tank 61 and the liquid B fed from the second tank 62 together and supplies a monomer liquid mixture mixed in the mixer 63 to the impregnation unit 20. The mixer 63 may be one configured to perform mixing by stirring with a stirring blade or one configured to perform mixing by stirring with a mixing head disposed in a static mixer.

In this example, the impregnation unit 20 is constituted by a plurality of impregnation rollers 21 and is configured such that the monomer liquid mixture is separately dropped, at a plurality of positions, onto the fibers 10 traveling through transport rollers 22, and the fibers 10 are impregnated with the monomer liquid mixture using the plurality of impregnation rollers 21.

A heating device that heats the fibers 10 in advance may be arranged on the upstream of the impregnation unit 20. By heating in advance, impregnation of the monomer liquid mixture can be rapidly conducted. In addition, moisture absorbed by the fibers 10 is evaporated immediately before impregnation, and thus the influence of moisture during polymerization of the monomer liquid mixture can be more suitably removed to stabilize polymerization reaction of the monomer liquid mixture.

In the heat-molding step, the fibers 10 impregnated in the impregnation unit 20 are caused to pass through the heat-molding unit 30 at a predetermined heating temperature T to thereby perform polymerization of the monomer liquid mixture and molding of the thermoplastic resin composite 12 containing a thermoplastic resin obtained by the polymerization. That is, the fibers 10 impregnated with the monomer liquid mixture are subjected to polymerization reaction by heating while being shaped.

In this example, the heat-molding unit 30 includes a heat-forming die 31 for molding the fibers 10 impregnated with the monomer liquid mixture to have a predetermined thickness and a predetermined width and a heating device 32 for heating the thermoplastic resin composite 12 pulled out from the heat-forming die 31 to promote polymerization reaction of the thermoplastic resin composite 12. Note that the heating device 32 may be omitted.

The heating temperature T, which is a setting temperature of the heat-molding unit 30, is a polymerization temperature for polymerizing the monomer liquid mixture and is not particularly limited as long as the heating temperature T is lower than the glass transition temperature Tg of the thermoplastic resin obtained by polymerizing the monomer liquid mixture (T < Tg). Preferably, the heating temperature T is a temperature lower than the glass transition temperature Tg of the thermoplastic resin by 30°C or more (T < Tg - 30°C). The heating temperature T may be, for example, 70°C to 180°C, 70°C to 160°C, or 80°C to 150°C. The temperature set as the heating temperature T may be a single temperature or may be set within a predetermined temperature range so as to have a temperature distribution depending on regions of the heat-molding unit 30. When the temperature set as the heating temperature T has a range, the highest temperature is set to a temperature lower than the glass transition temperature Tg, and the highest temperature is preferably set to a temperature lower than the glass transition temperature Tg by 30°C or more.

In the pulling-out step, the thermoplastic resin composite 12 is continuously pulled out from the heat-molding unit 30 by the pulling-out device 40. In this example, the pulling-out device 40 is constituted by a pair of upper and lower rollers 41 that nip and pull out the thermoplastic resin composite 12.

In this embodiment, since the heating temperature T, which is the polymerization temperature in the heat-molding unit 30, is lower than the glass transition temperature Tg of the thermoplastic resin, as described above, the thermoplastic resin of the thermoplastic resin composite 12 pulled out from the heat-molding unit 30 is in the glassy state at the glass transition temperature or lower. That is, at the stage when the thermoplastic resin is discharged from the heat-molding unit 30, the thermoplastic resin is in a quasi-cured state without stickiness and is in a state of being capable of maintaining its shape, although polymerization is not completed. Accordingly, the pulled-out thermoplastic resin composite 12 is unlikely to lose its shape and can maintain its shape.

Although not illustrated in the drawing, a heating device that further heats the thermoplastic resin composite 12 to promote or complete polymerization may be arranged on the downstream of the pulling-out device 40. A cutting device such as a cutter may be arranged on the downstream of the pulling-out device 40 or on the downstream of the additional heating device to obtain a plate material, a channel material, a round-bar material, a strand material, or the like.

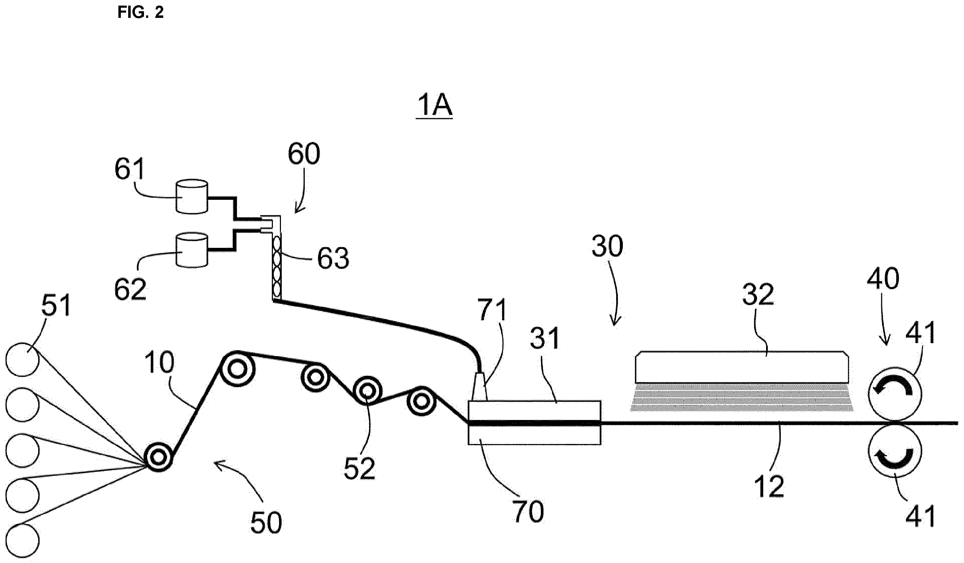

In the example illustrated in Fig. 1, the impregnation unit 20 is constituted by the plurality of impregnation rollers 21 arranged on the upstream of the heat-forming die 31. Alternatively, the impregnation unit may be arranged inside the heat-forming die 31. In such a case, the impregnation unit is incorporated in an upstream end portion of the heat-molding unit 30 as a portion of the heat-molding unit 30. Fig. 2 illustrates an example of such a structure.

In a manufacturing apparatus 1A illustrated in Fig. 2, fibers 10 drawn out from bobbins 51 of a fiber supply unit 50 pass through feed rollers 52 and are supplied to the inside of a heat-forming die 31 of a heat-molding unit 30. Meanwhile, a monomer liquid mixture supplied from a monomer supply unit 60 is directly injected into the heat-forming die 31 by an injection jig 71 disposed on an upstream end portion of the heat-forming die 31, and the fibers 10 are impregnated with the monomer liquid mixture in the heat-forming die 31. Thus, the upstream end portion of the heat-forming die 31 also functions as an impregnation unit 70.

An impregnation jig (not illustrated) such as an impregnation roller may be arranged inside the heat-forming die 31. This enables the fibers 10 to be impregnated with the monomer liquid mixture injected into the heat-forming die 31 by the injection jig 71 within a short time. This device of the impregnation unit 70 provides a high effect of impregnating the fibers 10 with the monomer liquid mixture within a short time while excess air is eliminated, and air inside the fibers 10 can be rapidly eliminated within a short time to reduce minute voids (cavities) inside the thermoplastic resin composite 12 after curing.

According to the embodiment described above, a thermoplastic resin composite can be effectively manufactured by continuous pultrusion.

More specifically, in typical continuous pultrusion, since a resin is subjected to polymerization reaction and cured by heating in a heat-molding unit, the temperature of the thermoplastic resin composite at an outlet of the heat-molding unit is substantially equal to a polymerization temperature of the resin set in the heat-molding unit. Therefore, in continuous pultrusion, if the polymerization temperature is higher than the glass transition temperature of the resin serving as a matrix, the thermoplastic resin composite at the outlet of the heat-molding unit is in a soft rubber-like state and cannot maintain its cross-sectional shape as a formed product of the thermoplastic resin composite, resulting in difficulty in molding. To address this problem, for example, a cooling step can be performed after heat molding to cool to the glass transition temperature or lower. However, the size of the apparatus is increased accordingly, and in addition, unless the pulling-out speed of the thermoplastic resin composite is reduced, the inside of the thermoplastic resin composite cannot be cooled, and thus production efficiency is poor.

According to this embodiment, since polymerization is performed in the heat-molding unit at a temperature lower than the glass transition temperature, and a thermoplastic resin composite in which a thermoplastic resin is in the glassy state is pulled out from the heat-molding unit, the thermoplastic resin composite molded in the heat-molding unit is likely to maintain its shape. Thus, production efficiency can be improved.

In continuous pultrusion of a thermoplastic resin composite containing, as a matrix, a polyamide resin obtained using a polymerizable lactam liquid mixture as a raw material, as disclosed in PTL 3, a decrease in strength due to moisture absorption, which is a drawback of polyamide resins, is inevitable. Furthermore, the catalytic ability of an anionic catalyst for $\varepsilon$-caprolactam, which is a raw material of the polymerizable lactam liquid mixture, is deactivated by moisture in air, and polymerization may be inhibited. In contrast to this, according to this embodiment, since a thermoplastic resin of polyurethane and/or polyurea composed of the active hydrogen component and the diisocyanate component is used as the matrix, the thermoplastic resin composite can be stably continuously manufactured.

The thermoplastic resin composite obtained by the manufacturing method according to this embodiment can be used as various light-weight structural members by, for example, stacking a plurality of thermoplastic resin composites and performing secondary processing such as hot-press molding. In such a case, the thermoplastic resin composite containing, as the base material, the thermoplastic resin according to this embodiment can reduce the time for secondary forming, can be expected to achieve high productivity, and are applicable to various members as an intermediate material of alternatives to metal materials for the purpose of reducing the weight, such as automobile structural members required to be recyclable, as compared with fiber-reinforced composite materials containing thermosetting resins as base materials.

EXAMPLES

A continuous pultrusion manufacturing of a thermoplastic resin composite was conducted using the manufacturing apparatus 1 illustrated in Fig. 1. The fibers 10 used were carbon fibers ("T700SC-24000-60E" manufactured by Toray Industries, Inc.).

A monomer liquid mixture used was a two-component curable composition ("H-6FP22" manufactured by DKS Co., Ltd.) composed of a liquid A containing a dialkylthiotoluenediamine and a liquid B containing a modified product of an aliphatic diisocyanate.

The pot life of the two-component curable composition was measured and found to be 300 seconds. In the measurement of the pot life, the time taken to reach 10,000 mPa.s was determined at 25°C and 60 rpm using a BM-type rotational viscometer with a No. 4 rotor.

Regarding the two-component curable composition, the glass transition temperature of the resin after polymerization was measured and found to be 175°C. The method for measuring the glass transition temperature is as follows.

[Glass transition temperature]

The liquid A and the liquid B were adjusted to a temperature of 25°C and mixed by stirring for one minute. The resulting monomer liquid mixture was applied in a sheet form and treated at 120°C for three hours to prepare a resin sheet having a thickness of 2 mm. A specimen of 5 mm $\times$ 2 cm was cut out from the prepared resin sheet, and a glass transition temperature (Tg) was measured with Rheogel E-4000 manufactured by UBM Co., Ltd. at a distance between chucks of 20 mm and a fundamental frequency of 10 Hz, while a strain was controlled in an automatic control mode.

To examine whether or not a flexural modulus of elasticity of a composite after impregnation became, by heating within five minutes, 10% or more of a flexural modulus of elasticity at the time of complete cure, the following test was conducted. Specifically, the fibers 10 were impregnated with the two-component curable composition and heated at 130°C for five minutes, and the flexural modulus of elasticity of the resulting composite after heating was measured. In addition, the fibers 10 were impregnated with the two-component curable composition and heated at 130°C for 10 minutes to completely perform curing (that is, complete polymerization), and the flexural modulus of elasticity of the thermoplastic resin composite at the time of complete cure was measured. According to the results, the flexural modulus of elasticity of the composite after heating for five minutes was 200 of the flexural modulus of elasticity of the composite at the time of complete cure. Thus, regarding the two-component curable composition, it was confirmed that, by heating within five minutes, the flexural modulus of elasticity of the composite became 10% or more of the flexural modulus of elasticity at the time of complete cure, and the time required for exhibiting sufficient mechanical properties was within five minutes. The flexural modulus of elasticity was measured in accordance with JIS K7074.

The monomer liquid mixture was supplied through the monomer supply unit 60 such that the volume fraction ($V_f$) of the fibers 10 in the thermoplastic resin composite 12 was 60%. More specifically, the liquid A and the liquid B were fed from the tanks 61 and 62, respectively, depending on the blending ratio and stirred through the mixer 63 composed of a static mixer to prepare the monomer liquid mixture. Polymerization reaction of the monomer liquid mixture starts from the moment of stirring. Thus, in order to perform continuous pultrusion, it is necessary to continue to supply a new monomer liquid mixture before reaching the pot life so as to cause a staying monomer liquid mixture to flow out. Therefore, the monomer liquid mixture was dropped on three separate positions so as to accelerate the flow of the staying monomer liquid mixture. The fibers 10 supplied from the fiber supply unit 50 were impregnated with the monomer liquid mixture in the impregnation unit 20 composed of the plurality of impregnation rollers 21.

The heat-forming die 31 used was made of an aluminum alloy. In order to avoid rapid curing reaction of the monomer liquid mixture staying near a die inlet into which the fibers 10 were fed, a water-cooled tube was provided in the die inlet so that the temperature near the die inlet was kept at about 25°C. Furthermore, in order to prevent the heat-forming die 31 and the thermoplastic resin composite 12 during curing reaction from adhering to each other, a core die divided into upper and lower two thin components formed of PTFE was placed in a portion inside the heat-forming die 31 made of the aluminum alloy, the portion coming in contact with the thermoplastic resin composite 12. By using this heat-forming die 31, the thermoplastic resin composite 12 having a width of 15 mm and a thickness of 0.5 mm was molded in the heat-forming die 31 with a temperature distribution of 80°C to 130°C.

The thermoplastic resin composite 12 pulled out from the heat-forming die 31 by the pulling-out device 40 was further cured by heating in the heating device 32 which was a far-infrared heater. The heating temperature in the heating device 32 was 110°C to 120°C. In this example, the heating device 32 has a variable length, and the length of the heating device 32 was set to 1.0 m. Since the heat-forming die 31 had a length of 0.5 m, the length of the heat-molding unit 30 including the heating device 32 was 1.5 m. The pulling speed was set to 500 mm/min so as to ensure a polymerization time of three minutes (that is, so as to ensure three minutes as a polymerization time from the heat-forming die 31 to the heating device 32).

In this Example, while the glass transition temperature of the resin after polymerization of the monomer liquid mixture is 175°C, the heating temperature T in the heat-molding unit 30 is 80°C to 130°C. Thus, the heating temperature T was a temperature lower than the glass transition temperature by 30°C or more. Accordingly, at the stage when the thermoplastic resin composite 12 was pulled out from the heat-molding unit 30, the thermoplastic resin composite 12 was in the glassy state at the glass transition temperature or lower, that is, in the quasi-cured state.

The thermoplastic resin composite 12 pulled out through the pulling-out device 40 was cut to a length of 30 cm. Subsequently, the thermoplastic resin composite 12 was heated in an oven at 120°C for 60 minutes in order to further complete the polymerization reaction thereof to obtain a completely cured thermoplastic resin composite (prepreg). Hot-pressing was conducted using the obtained prepreg at a heating temperature of 200°C for 10 minutes and a pressure of 2 MPa to prepare a tensile test specimen.

The volume fraction of the fibers contained in the obtained tensile test specimen was measured by a calcination method. According to the result, the volume fraction of the fibers was 56%. The measurement of the fiber volume fraction by the calcination method was conducted in accordance with JIS K7052.

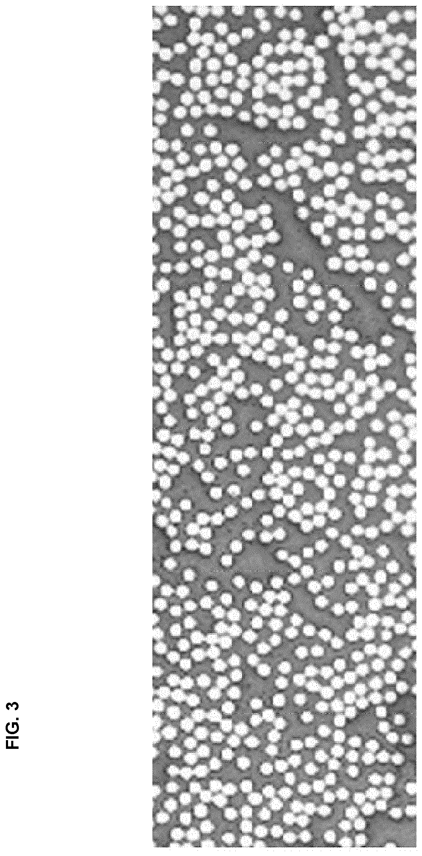

A cross section of the tensile test specimen was measured with an optical microscope ("GX51" manufactured by Olympus Corporation). As shown in Fig. 3, air bubbles (voids) were not observed inside, and it was confirmed that a thermoplastic resin composite having a very good quality could be molded. In Fig. 3, the dark gray portion indicates a thermoplastic resin serving as a matrix, and the white portions indicate carbon fibers.

In this manner, hot-pressing the thermoplastic resin composite 12 of Example at a temperature slightly higher than the glass transition temperature by about 30°C could provide a formed product having beautiful appearance and no air bubbles between layers. This means that the continuously pultruded thermoplastic resin composite 12 can be easily reprocessed into a formed product having any shape.

A tensile strength of the tensile test specimen was measured, and the measured value was compared with the theoretical value. The measured value of the tensile strength was 2,500 MPa. The tensile test was conducted in accordance with JIS K7165. Regarding the dimensions of the test specimen, the total length was 240 mm, the width was 15 mm, and the plate thickness was 0.5 mm. An aluminum tab was bonded to both surfaces in portions 40 mm extending from each end of the formed product to prevent breaking at chuck portions due to stress concentration. The tensile test was conducted using, as a tensile testing machine, a Servopulser (EFH-EG100KN-20L, manufactured by SHIMADZU CORPORATION) at a test speed of 2 mm/s.

The theoretical value was calculated based on the rule of mixture represented by the following formula on the assumption that the thermoplastic resin and the carbon fibers were completely bonded together.

[Math. 1]

$$\sigma_c = \alpha\sigma_{fu}V_f + (\sigma_m)_{fu}(1 - V_f)$$

In the formula, $\sigma_c$ is a theoretical value, $\alpha$ is a factor determined by the fiber form (in the case of unidirectional reinforcement, $\alpha = 1.0$), $\sigma_{fu}$ is a tensile fracture stress of the fibers, $(\sigma_m)_{fu}$ is a resin fracture stress relative to fiber breaking elongation, and $V_f$ is a fiber volume fraction.

According to the results, the theoretical value of the tensile strength was 2,750 MPa. Thus, the thermoplastic resin composite according to Example exhibits a high strength that is about 90% relative to the theoretical strength, showing that molding with a very high quality can be performed.

As described above, the method for manufacturing a thermoplastic resin composite according to Example enables stable manufacturing of a good-quality thermoplastic resin composite having no air bubbles (voids) or the like, achieves high productivity because of continuous pultrusion, and can also adjust, for example, a curing reaction speed of the thermoplastic resin composite to adjust productivity of products. It was also demonstrated that reprocessing and secondary forming could be performed by secondary pressing at a very low temperature and that even a formed product having a complex shape could be easily manufactured with high productivity.

Some embodiments of the present invention have been described above. These embodiments are only exemplary and are not intended to limit the scope of the invention. These embodiments can be carried out in various other forms, and various omissions, replacements, and modifications may be made without departing from the spirit of the invention. These embodiments and omissions, replacements, modifications, and the like of the embodiments fall within the scope or spirit of the invention and also fall within the scope of the invention as defined by the appended claims and equivalents thereof.

**Claims**

1. A method for manufacturing a thermoplastic resin composite containing a thermoplastic resin and a fiber, the method comprising:

   continuously impregnating a fiber with a thermoplastic resin-forming composition containing an active hydrogen component and a diisocyanate component;
   causing the fiber to pass through a heat-molding unit to perform polymerization of the thermoplastic resin-forming composition and molding of a thermoplastic resin composite containing a thermoplastic resin obtained by the polymerization; and
   continuously pulling out the thermoplastic resin composite from the heat-molding unit,
   wherein a heating temperature of the heat-molding unit is lower than a glass transition temperature of the thermoplastic resin, and the thermoplastic resin of the thermoplastic resin composite pulled out from the heat-molding unit is in a glassy state.

2. The method for manufacturing a thermoplastic resin composite according to Claim 1, wherein when a composite obtained by impregnating the fiber with the thermoplastic resin-forming composition is heated at the heating temperature, a flexural modulus of elasticity becomes, within five minutes, 10% or more of a flexural modulus of elasticity at a time of complete cure.

3. The method for manufacturing a thermoplastic resin composite according to Claim 1 or 2, wherein the heating temperature is lower than the glass transition temperature of the thermoplastic resin by 30°C or more.

4. The method for manufacturing a thermoplastic resin composite according to any one of Claims 1 to 3, wherein the thermoplastic resin-forming composition has a pot life of 30 seconds or more, the pot life being a time taken to reach a viscosity of 10,000 mPa.s under a temperature condition of 25°C.

5. The method for manufacturing a thermoplastic resin composite according to any one of Claims 1 to 4, wherein the active hydrogen component of the thermoplastic resin-forming composition contains an aromatic diamine having an alkylthio group, and the diisocyanate component contains at least one diisocyanate selected from the group consisting of aliphatic diisocyanates, alicyclic diisocyanates, and modified products thereof.

6. An apparatus for manufacturing a thermoplastic resin composite containing a thermoplastic resin and a fiber, the apparatus comprising:

   an impregnation unit that continuously impregnates a fiber with a thermoplastic resin-forming composition containing an active hydrogen component and a diisocyanate component;
   a heat-molding unit that causes the fiber to pass therethrough to perform polymerization of the thermoplastic resin-forming composition and molding of a thermoplastic resin composite containing a thermoplastic resin obtained by the polymerization; and
   a pulling-out device that continuously pulls out the thermoplastic resin composite from the heat-molding unit,
   wherein a heating temperature of the heat-molding unit is lower than a glass transition temperature of the thermoplastic resin, and
   the pulling-out device pulls out from the heat-molding unit the thermoplastic resin composite in which the thermoplastic resin is in a glassy state.

FIG. 1

FIG. 2

EP 4 249 198 A1

FIG. 3

## INTERNATIONAL SEARCH REPORT

| International application No. |
| --- |
| **PCT/JP2021/041703** |

**A.     CLASSIFICATION OF SUBJECT MATTER**

*B29B 11/16*(2006.01)i; *C08J 5/24*(2006.01)i; *C08G 18/32*(2006.01)i; *B29C 70/52*(2006.01)i
FI:     C08J5/24 CFF; C08G18/32 037; B29B11/16; B29C70/52

According to International Patent Classification (IPC) or to both national classification and IPC

**B.     FIELDS SEARCHED**

Minimum documentation searched (classification system followed by classification symbols)

B29B11/16; C08J5/24; C08G18/32; B29C70/52

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| A | US 2007/0117921 A1 (MILGARD MANUFACTURING INCORPORATED) 24 May 2007 (2007-05-24) claims, examples | 1-6 |
| A | WO 2020/193396 A1 (COVESTRO INTELLECTUAL PROPERTY GMBH & CO. KG) 01 October 2020 (2020-10-01) claims, examples | 1-6 |
| A | JP 2002-530445 A (HUNTSMAN INTERNATIONAL LLC) 17 September 2002 (2002-09-17) claims, examples, entire text | 1-6 |
| A | JP 2002-508021 A (THE DOW CHEMICAL COMPANY) 12 March 2002 (2002-03-12) claims, examples, entire text | 1-6 |
| A | WO 2019/220819 A1 (DAI-ICHI KOGYO SEIYAKU CO., LTD.) 21 November 2019 (2019-11-21) claims, examples, entire text | 1-6 |

☐ Further documents are listed in the continuation of Box C.     ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 December 2021** | **11 January 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/041703**

| Patent document cited in search report | | | Publication date (day/month/year) | Patent family member(s) | | | Publication date (day/month/year) |
|---|---|---|---|---|---|---|---|
| US | 2007/0117921 | A1 | 24 May 2007 | US | 2011/0054108 | A1 | |
| | | | | WO | 2007/061471 | A1 | |
| | | | | EP | 1951780 | A1 | |
| | | | | CA | 2629139 | A | |
| | | | | CN | 101312999 | A | |
| WO | 2020/193396 | A1 | 01 October 2020 | EP | 3733729 | A1 | |
| | | | | CN | 111748073 | A | |
| JP | 2002-530445 | A | 17 September 2002 | US | 2002/0045690 | A1 | |
| | | | | claims, examples | | | |
| | | | | US | 2004/0094859 | A1 | |
| | | | | WO | 2000/029459 | A1 | |
| | | | | EP | 1131369 | A1 | |
| | | | | CA | 2359560 | A | |
| | | | | TW | 482780 | B | |
| | | | | AU | 1721200 | A | |
| | | | | CN | 1326476 | A | |
| | | | | KR | 10-2001-0103702 | A | |
| JP | 2002-508021 | A | 12 March 2002 | US | 5891560 | A | |
| | | | | claims, examples | | | |
| | | | | US | 6165604 | A | |
| | | | | WO | 1999/001501 | A2 | |
| | | | | EP | 0993487 | A2 | |
| | | | | BR | 9810497 | A | |
| | | | | TW | 517068 | B | |
| | | | | CA | 2294963 | A | |
| | | | | AT | 294832 | T | |
| | | | | KR | 10-2001-0014389 | A | |
| WO | 2019/220819 | A1 | 21 November 2019 | JP | 2019-203113 | A | |
| | | | | EP | 3795621 | A1 | |
| | | | | claims, examples | | | |
| | | | | JP | 6580774 | B1 | |
| | | | | CN | 112074561 | A | |

Form PCT/ISA/210 (patent family annex) (January 2015)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004074427 A
- JP 2002530445 W
- JP 2017007266 A
- JP 6580774 B